# EUROPEAN PATENT SPECIFICATION

(11) **EP 2 312 708 B1**
(45) Date of publication and mention of the grant of the patent: **06.07.2016**
(21) Application number: 09012900.8
(22) Date of filing: 13.10.2009
(51) Int. Cl.: H02B 13/02

(54) **Medium voltage switchgear**
Mittelspannungsschaltanlage
Commutation de tension moyenne

(43) Date of publication of application: 20.04.2011
(73) Proprietor: ABB Technology AG, 8050 Zürich (CH)
(72) Inventor: Mildes, Hartmut, 40878 Ratingen (DE)
(74) Representative: Schmidt, Karl Michael

(56) References cited:
- DE-A1-102007 063 478
- FR-A1- 2 772 198

## Description

The invention relates to a medium voltage switchgear, e.g. gas insulated switchgear, which consist of an arrangement of several switching device panels, like feeder panel, coupler panel and riser panel, each with a separate housing and further interconnecting means between the housings.

Basic definition for the use of the nomenclature in the invention is needed.

Medium voltage switchgear panels have furthermore three basic functions beside there main function of switching devices, which are according to the interconnection of several switchgear panels and the interconnection with the main cable. So there are so called feeder panels in which is arranged the interconnection to the distribution to cables in the cable cellar under the switchgear. There is furthermore a so called coupler panel, in which an interconnection is located between the busbar and a switching device. The coupler panel devides the busbar into two sections. And furthermore, the riser panel, in which is arranged the "rising" interconnection back to busbar. Therefore a coupler panel and a riser panel are each time arranged beside. The dimensions of the panels of switchgear manufacturerare not unified. They depend on the design and the ratings. Nevertheless for primary GIS a panel width of 600 mm became quite common, at least for ratings up to 1250 A. For higher ratings different panel width are used, e.g. 800 mm. As customers prefer to plan their building before finally selecting the supplier of the switchgear, there is a tendency that a grid of 600 mm is used for all panel variants. The existing answers to this requirement are panel width of 600 mm for panels up to 1250 A and 1200 mm for panels > 1250 A. So the measure of 600 mm occur very often, but not exclusively.

DE 10 2007 063 478 A1 discloses a busbar arrangement in panel dimensions of 600 and 900 millimeters are used. Coupler and riser panels are always used together. On the base of a panel width of 600 mm at least, an arrangement of n=4 panel measures for the use of more than 1250 A, the width of the complete arrangement is at least 2400 mm for such known construction.

So it is an object of the invention to unify the measure system in a comfortable way, for easy construction and assembly.

The requirement for the common grid or base measure is based on the need for the openings in the floor to connect the cables to the panels. The existing solutions are using a panel width of 2x600 mm = 1200 mm for nominal current >1250 A. This is independent if the panel type is a feeder or a coupler or riser panel. As coupler and riser panels are always used together, this results in 4x600 = 2400 mm. This is space consuming.

So the invention for a Medium voltage switch gear is, that each functional unit width is dimensioned to a fix base measure x or integer multiples n*x of it.

The fundamental or basical advantageous measure is the base measure of 300 mm. On the basis of this base measure, all final width measures of a switchgear, consisting of several panels can be planed.

In a further embodiment, a feeder panel is arranged with a resulting width, given by an integer of n=4 according to the base measure X of 300 mm, resulting 1.200 mm.

A riser panel is arranged with a resulting width, given by an integer of n=3 according to the base measure X of 300 mm, resulting 900 mm, and a coupler panel is arranged with a resulting width, given by an integer of n=3 according to the base measure X of 300 mm, resulting 900 mm.

According to the invention, a coupler panel and a riser panel are arranged next, with a resulting width, given by an integer of n=6 according to the base measure X of 300 mm, resulting 1.800 mm.

As coupler and riser panels always have to be used together, they are forming a functional unit. This functional unit will be selected by the smallest selection of n. By using for ratings < 1.250 Ampere, 900 mm panels for coupler and riser, this will lead to 1.800 mm, which is 6*X.

The proposed solution bases on the following facts:
- Coupler and riser panels are always used together, side by side (except coupler/riser using cable connections and are not placed in a switchgear line, but e.g. back to back).
- Coupler and riser panels have no need for openings in the floor of the building.

Taking care of this, coupler and riser panels can be designed using a panel width of 900 mm per panel. This is only requiring 1800 mm = 6x300 mm in total. This is 600 mm less. As no cables have to be connected, 900 mm (3x300 mm) panel width is sufficient for ratings >1250 A. This is saving material for the panels and in the same space one additional outgoing feeder panel can be installed, which is an advantage for the customer.

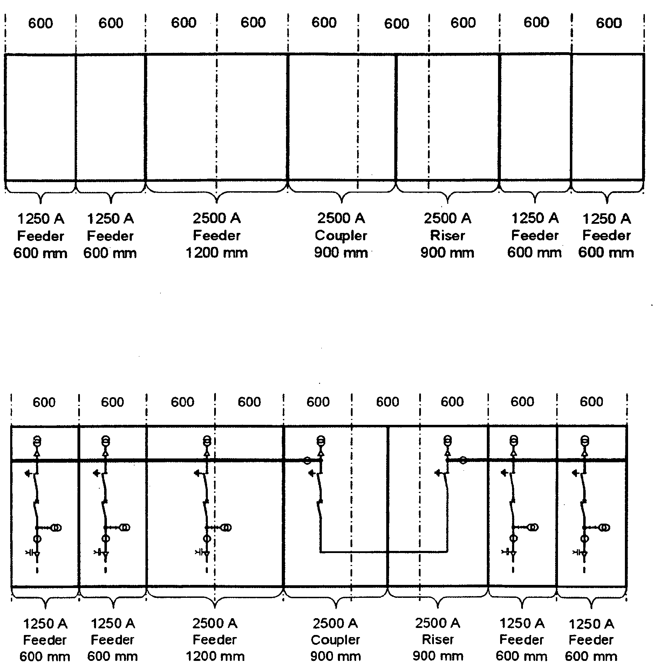

In an advantageous embodiment, the sectionalisation of the busbar follows the measures in claim 6. This is a result, which can be seen in the Figure 1.

An embodiment of the invention is shown in the drawings.
- Figure 1:: Example measures and arrangements of several panel types to a resulting switch gear

Figure 1 shows an example of an arrangement of several feeder panels 3, coupler panels 2 and riser panel 4. The switch gears starts left with two feeder panels 3 beside with a measure of 600 mm each. This is in each case a measure of 2xbase-measure. These feeders are used for a current carriing capability of 1.250 Ampere each. Beneath is arranged a feeder with a current carriing capability of 2.500 Ampere with a measure of 4x300 mm th. m. 1.200 mm. Beside of this feeder panel is arranged a coupler panel for a current carriing capability of 2.500 Ampere with the measure of 3x300 mm, th. m. 900 mm. Beneath this coupler is arranged furthermore a riser panel 4 with a current carriing capability of 2.500 Ampere an a measure of 3x300 mm as well. Furthermore are arranged beneath the riser panel 4 two further feeder panels like on the left side.

This example shows the systematic arrangement of the several functional panels on the basis of the base measure of nx300 mm.

The reduced panel width for coupler and riser will save material. This will mainly be copper for the busbars of 600 mm per phase and stainless steel of the high voltage compartments and steel for the other compartments. The additional benefit of reduced space requirements for the customer is hard to quantify.

Figure 1 also shows the function of a coupler panel 2 and riser panel 4.

The coupler panel is provided to interrupt the otherweise persistent busbar into two sections, which are arranged on the top of the panels. So the busbar is connected with switching devices 6. So the direction of the cables or bar is from ontop towards the bottom. Therefore a riser panel 4 has to arranged beneath the coupler panel 2, in order, to connect back upwards running bus with the central busbar on top. Therefore it is called "riser".

Like it can be seen in Figure 1, the functional unit, consisting of a coupler panel and a riser panel has an advantageous resulting measure.

In this embodiment of the invention the basic measure of 300 mm is used in the complete arrangement in that way, that a sectionalization of 2*300mm, th.m. 600mm each can be provided.

### Position numbers

- 1: Switchgear
- 2: Coupler panel
- 3: Feeder panel
- 4: Riser panel
- 5: Busbar
- 6: Switching device
- 7: Ground level
- 8: Busbar-section
- 9: Busbar-section

## Claims

1. Medium voltage switchgear, for ratings above 1250 A, e.g. gas insulated switchgear, which consist of an arrangement of several switching device panels, like feeder panel, coupler panel and riser panel, each with a separate housing and further interconnecting means between the housings, wherein that each panel width or the width of a functional unit consisting of several functional panels, like riser, coupler, feeder, is dimensioned to an integer of a fix base measure x or integer multiples n*x of it, **characterized in that** a coupler panel and a riser panel are arranged next to each other with a resulting width, given by an integer of n=6 according to the base measure X of 300 mm, resulting 1.800 mm.

2. Medium voltage switchgear, according to claim 1,
**characterized in,**
**that** the feeder panel is arranged with a resulting width, given by an integer of n=4 according to the base measure X of 300 mm, resulting 1.200 mm.

3. Medium voltage switchgear, according to claim 1,
**characterized in,**
**that** a riser panel is arranged with a resulting width, given by an integer of n=3 according to the base measure X of 300 mm, resulting 900 mm.

4. Medium voltage switchgear, according to claim 1,
**characterized in,**
**that** a coupler panel is arranged with a resulting width, given by an integer of n=3 according to the base measure X of 300 mm, resulting 900 mm.

5. Medium voltage switchgear, according to claim 1,
**characterized in,**
**that** the sectionalisation of the busbar follows the measures in claim 1.

## Patentansprüche

1. Mittelspannungsschaltanlage für Schaltvermögen oberhalb 1250 A, zum Beispiel eine gasisolierte Schaltanlage, die aus einer Anordnung mehrerer Schaltvorrichtungsfelder, wie zum Beispiel Einspeisungsfeld, Kopplungsfeld und Hochführfeld, jeweils mit einem separaten Gehäuse besteht, und ferner aus Zusammenschaltungsmitteln zwischen den Gehäusen, wobei jede Feldbreite oder die Breite einer Funktionseinheit, die aus mehreren Funktionsfeldern, wie zum Beispiel Hochführfeld, Kopplungsfeld, Einspeisungsfeld, besteht, auf eine Ganzzahl eines feststehenden Basismaßes X oder mehrfacher Ganzer n*x davon bemessen ist, **dadurch gekennzeichnet, dass** ein Kopplungsfeld und ein Hochführfeld nebeneinander mit einer resultierenden Breite eingerichtet sind, die durch eine Ganzzahl von n=6 gemäß dem Basismaß X von 300 mm gegeben ist, was in 1800 mm resultiert.

2. Mittelspannungsschaltanlage nach Anspruch 1, **dadurch gekennzeichnet, dass** das Einspeisungsfeld mit einer resultierenden Breite eingerichtet ist, die durch eine Ganzzahl von n=4 gemäß dem Basismaß X von 300 mm gegeben ist, was in 1200 mm resultiert.

3. Mittelspannungsschaltanlage nach Anspruch 1, **dadurch gekennzeichnet, dass** ein Hochführfeld mit einer resultierenden Breite eingerichtet ist, die durch eine Ganzzahl von n=3 gemäß dem Basismaß X von 300 mm gegeben ist, was in 900 mm resultiert.

4. Mittelspannungsschaltanlage nach Anspruch 1, **dadurch gekennzeichnet, dass** ein Kopplungsfeld mit einer resultierenden Breite eingerichtet ist, die durch eine Ganzzahl von n=3 gemäß dem Basismaß X von 300 mm gegeben ist, was in 900 mm resultiert.

5. Mittelspannungsschaltanlage nach Anspruch 1, **dadurch gekennzeichnet, dass** die Unterteilung der Sammelschiene den Messungen nach Anspruch 1 folgt.

## Revendications

1. Appareillage de commutation de moyenne tension pour des valeurs nominales supérieures à 1250 A, par exemple un appareillage de commutation à isolation gazeuse, qui consiste en un agencement de plusieurs tableaux de dispositifs de commutation, tels que des tableaux de distribution, des tableaux de couplage et des tableaux de colonnes montantes, ayant chacun un boîtier distinct ainsi que des moyens d'interconnexion entre les boîtiers, la largeur de chaque tableau ou la largeur d'une unité fonctionnelle consistant en plusieurs tableaux fonctionnels, tels que des tableaux de distribution, des tableaux de couplage et des tableaux de colonnes montantes, est dimensionnée de façon à être égale à un entier d'une mesure de base fixe x ou un entier multiple n*x de celle-ci,
**caractérisé en ce que** un tableau de couplage et un tableau de colonne montante sont disposés à côté l'un de l'autre, avec une largeur résultante, donnée par un entier de n = 6 en fonction de la mesure de base X de 300 mm, qui est de 1800 mm.

2. Appareillage de commutation de moyenne tension selon la revendication 1,
**caractérisé en ce que** le tableau de distribution est conçu avec une largeur résultante, donnée par un entier de n = 4 en fonction de la mesure de base X de 300 mm, qui est de 1200 mm.

3. Appareillage de commutation de moyenne tension selon la revendication 1,
**caractérisé en ce qu'**un tableau de colonne montante est conçu avec une largeur résultante, donnée par un entier de n = 3 en fonction de la mesure de base X de 300 mm, qui est de 900 mm.

4. Appareillage de commutation de moyenne tension selon la revendication 1,
**caractérisé en ce qu'**un tableau de couplage est conçu avec une largeur résultante, donnée par un entier de n = 3 en fonction de la mesure de base X de 300 mm, qui est de 900 mm.

5. Appareillage de commutation de moyenne tension selon la revendication 1,
**caractérisé en ce que** le sectionnement de la barre de bus suit les mesures de la figure 1.
